# EUROPEAN PATENT SPECIFICATION

(11) **EP 3 194 851 B1**
(45) Date of publication and mention of the grant of the patent: **30.12.2020**
(21) Application number: 15767064.7
(22) Date of filing: 14.09.2015
(51) Int. Cl.: F23R 3/00

(54) **COMBUSTOR DOME DAMPER SYSTEM**
GASTURBINENBRENNKAMMEREINTRITTSHAUBE MIT DÄMPFERSYSTEM
DÔME DE DISPOSITIF DE COMBUSTION COMPRENANT UN AMORTISSEUR

(30) Priority: 15.09.2014 US 201414486289
(43) Date of publication of application: 26.07.2017
(60) Divisional application: 20194863.5
(73) Proprietor: Ansaldo Energia IP UK Limited, London W1G 9DQ (GB)
(72) Inventor: METTERNICH, Jeremy, Wellington, Florida 33414 (US); BOTHIEN, Mirko Ruben, CH-8037 Zürich (CH); OUMEJJOUD, Khalid, Palm Beach Gardens, Florida 33418 (US); TERRELL, Dwain P., Jupiter, Florida 33458-7925 (US)
(74) Representative: Andreotti, Erika
(86) International application number: PCT/US2015/049919
(87) International publication number: WO 2016/044135

(56) References cited:
- EP-A1- 1 596 130
- WO-A1-2013/043078
- US-A1- 2005 223 707
- US-A1- 2010 313 568
- US-A1- 2014 060 063

## Description

### CROSS-REFERENCE TO RELATED APPLICATIONS

Not applicable.

### TECHNICAL FIELD

The present invention relates generally to an apparatus and method for controlling the combustion dynamics in a gas turbine combustion system. More specifically, a combustion system is provided having a combustor dome and a plurality of dome damper mechanisms for reducing the pressure fluctuations within the combustion system.

### BACKGROUND OF THE INVENTION

In an effort to reduce the amount of pollution emissions from gas-powered turbines, governmental agencies have enacted numerous regulations requiring reductions in the amount of oxides of nitrogen (NOx) and carbon monoxide (CO). Lower combustion emissions can often be attributed to a more efficient combustion process, with specific regard to fuel injector location, airflow rates, and mixing effectiveness.

Early combustion systems utilized diffusion type nozzles, where fuel is mixed with air external to the fuel nozzle by diffusion, proximate the flame zone. Diffusion type nozzles historically produce relatively high emissions due to the fact that the fuel and air burn essentially upon interaction, without mixing, and stoichiometrically at high temperature to maintain adequate combustor stability and low combustion dynamics.

An enhancement in combustion technology is the concept of premixing fuel and air prior to combustion to form a homogeneous mixture that burns at a lower temperature than a diffusion type flame and thereby produces lower NOx emissions. Premixing can occur either internal to the fuel nozzle or external thereto, as long as it is upstream of the combustion zone. An example of a premixing combustor has a plurality of fuel nozzles, each injecting fuel into a premix chamber where fuel mixes with compressed air from a plenum before entering a combustion chamber. Premixing fuel and air together before combustion allows for the fuel and air to form a more homogeneous mixture, which, when ignited will burn more completely, resulting in lower emissions. However, due to the mixing and combustion processes inherent in a premixing combustor, the pressures within the combustion system will fluctuate and varying pressure fluctuations can cause damage to the combustion hardware if not adequately controlled. Some solutions are disclosed in documents US 2014/060063, EP 1596130, WO 2013/043078. However, these solutions are not sufficiently flexible and efficient.

### SUMMARY

The present invention is defined in the claims, and discloses an apparatus and method for reducing the combustion dynamics in a multi-staged premix gas turbine combustor. More specifically, in an embodiment of the present invention, a dome assembly for a gas turbine combustor is provided having a dome plate with a generally hemispherical cross section, a plurality of openings in the dome plate, and a plurality of dome dampers, each encompassing a respective opening. The dome dampers comprise a damper body having a cavity, a removable coverplate secured to the end of a damper, and a plurality of pure holes located about the damper body.

In an alternate embodiment of the present invention, a gas turbine combustion system is disclosed comprising a generally cylindrical combustion liner located radially within a flow sleeve, and a set of main fuel injectors positioned radially outward of the combustion for directing a flow of fuel to mix with air to enter the combustion liner. A combustor dome assembly encompasses the inlet end of the combustion liner and has a dome plate with a generally hemispherical cross section, a plurality of openings in the dome plate, and a plurality of dome dampers, each encompassing a respective opening. Each of the dampers has a damper body and a removable coverplate secured thereto to form a damper volume and purge holes located in the damper body.

In yet another embodiment of the present invention, a method of regulating combustion dynamics in a gas turbine combustor is provided. The method comprises providing a combustion system having a combustor dome in which a plurality of openings are present, each of the openings surrounded by a dome damper. One or more of the desired frequencies to control is determined and a volume required to target the one or more desired combustion frequencies is then determined. A desired amount of purge air flow to pass into the plurality of dampers is determined and a coverplate is secured to an end of each dome damper where the coverplate helps to form a desired volume within each damper, where the desired volume is sufficient in size to adequately dampen pressure fluctuations in the combustion system.

In a further embodiment of the present invention, a dome assembly for a gas turbine combustor is provided having a dome plate with a generally hemispherically-shaped cross section, an adapter plate positioned adjacent to the dome plate, one or more resonator boxes, extending from the adapter plate and a plurality of dome dampers.

Additional advantages and features of the present invention will be set forth in part in a description which follows, and in part will become apparent to those skilled in the art upon examination of the following, or may be learned from practice of the invention. The instant invention will now be described with particular reference to the accompanying drawings.

### BRIEF DESCRIPTION OF THE SEVERAL VIEWS OF THE DRAWINGS

The present invention is described in detail below with reference to the attached drawing figures, wherein:
FIG. 1 is a cross section of a gas turbine combustion system in accordance with an embodiment of the present invention.
FIG. 2 is a perspective view of a portion of a gas turbine combustor in accordance with an embodiment of the present invention.
FIG. 3 is an alternate perspective of the portion of the gas turbine combustor of FIG. 2 in accordance with an embodiment of the present invention.
FIG. 4 is an end view of a portion of the gas turbine combustor of FIG. 2 in accordance with an embodiment of the present invention.
FIG. 5 is an opposing end view of the gas turbine combustor of FIG. 2 in accordance with an alternate embodiment of the present invention.
FIG. 6 is a cross section taken through the portion of the gas turbine combustor depicted in FIG. 2 in accordance with an embodiment of the present invention.
FIG. 7 is a detailed cross section view of a portion of the gas turbine combustor of FIG. 6 in accordance with an embodiment of the present invention.
FIG. 8 is a detailed cross section view of a damper portion of the gas turbine combustor of FIG. 6 in accordance with an embodiment of the present invention.
FIG. 9 is an alternate cross section taken through a portion of the gas turbine combustor depicted in FIG. 2 in accordance with an embodiment of the present invention.
FIG. 10 is a perspective view of a portion of a gas turbine combustor in accordance with an alternate embodiment of the present invention.
FIG. 11 is an alternate perspective view of a portion of the gas turbine combustor in accordance with the alternate embodiment of the present invention of FIG. 10.
FIG. 12 an end view of a portion of the gas turbine combustor of FIG. 10 in accordance with an alternate embodiment of the present invention.
FIG. 13 is an opposing end view of the gas turbine combustor of FIG. 10 in accordance with an alternate embodiment of the present invention.
FIG. 14 is a cross section of the gas turbine combustor of FIG. 10 in accordance with an alternate embodiment of the present invention.
FIG. 15 is a detailed cross section view of a damper portion of the portion of the gas turbine combustor of FIG. 14 in accordance with an alternate embodiment of the present invention.
FIG. 16 is a detailed cross section view of a damper portion of the gas turbine combustor in accordance with yet another alternate embodiment.
FIG. 17 is a partial perspective view of a damper portion and dome plate region of the gas turbine combustor of FIG. 16 in accordance with yet another alternate embodiment.
FIG. 18 is a detailed cross section view of a damper portion of the gas turbine combustor in accordance with an additional embodiment.
FIG. 19 is a partial perspective view of a damper portion and dome plate region of the gas turbine combustor of FIG. 18 in accordance with an additional embodiment.
FIG. 20 is a perspective view of a portion of a gas turbine combustor in accordance with an alternate damper support configuration of the present invention.
FIG. 21 is a perspective view of a portion of the gas turbine combustor configuration of FIG. 20.
FIG. 22 is a detailed perspective view of the damper portion of the gas turbine combustor of FIG. 21.
FIG. 23 is a cross section view of the damper portion of the gas turbine combustor of FIG 21.
FIG. 24 is a perspective view of a forward face of an adapter plate in accordance with an embodiment of the present invention.
FIG. 25 is a perspective view of an aft face of the adapter plate of FIG. 24 in accordance with an embodiment of the present invention.
FIG. 26 is a flow diagram outlining a method of regulating combustor dynamics in accordance with yet another embodiment of the present invention.

### DETAILED DESCRIPTION

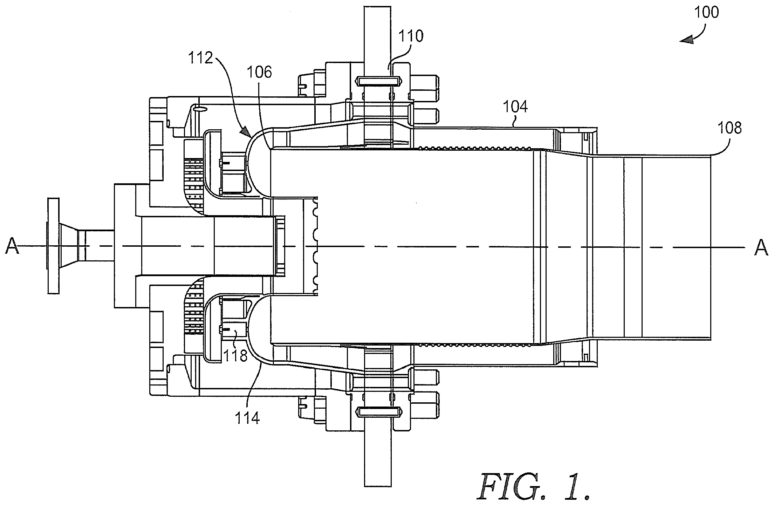

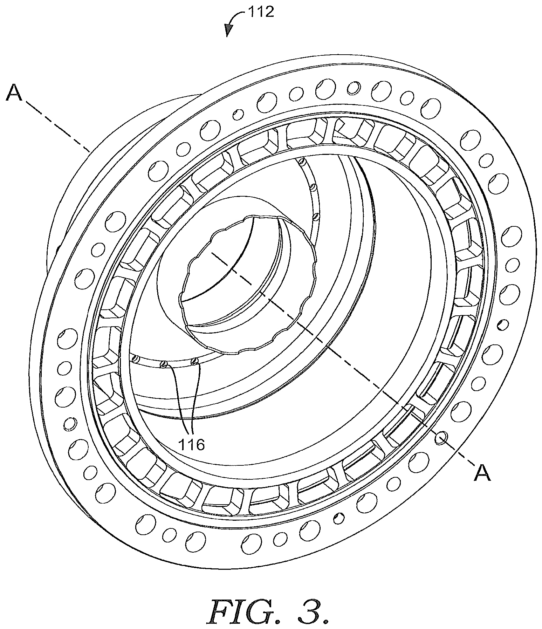

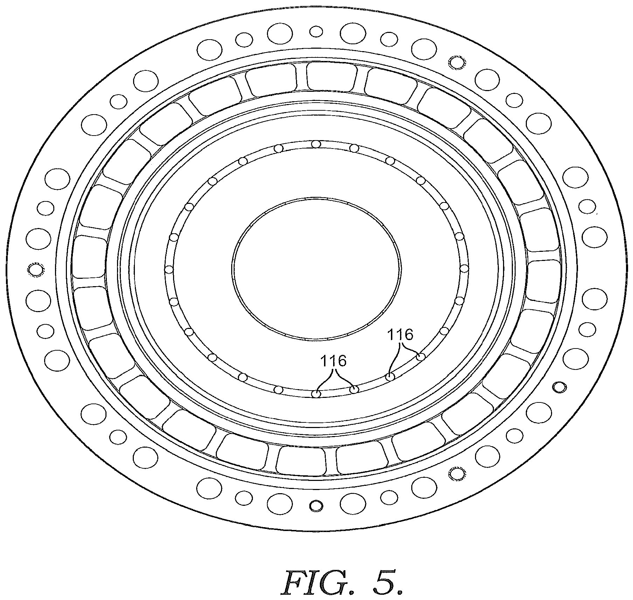

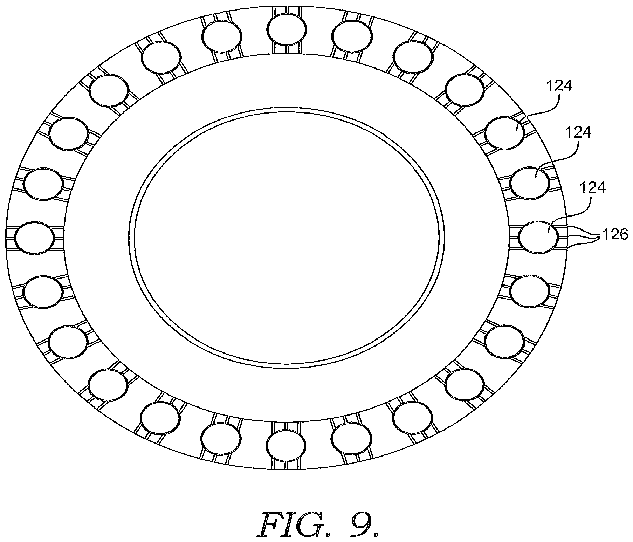

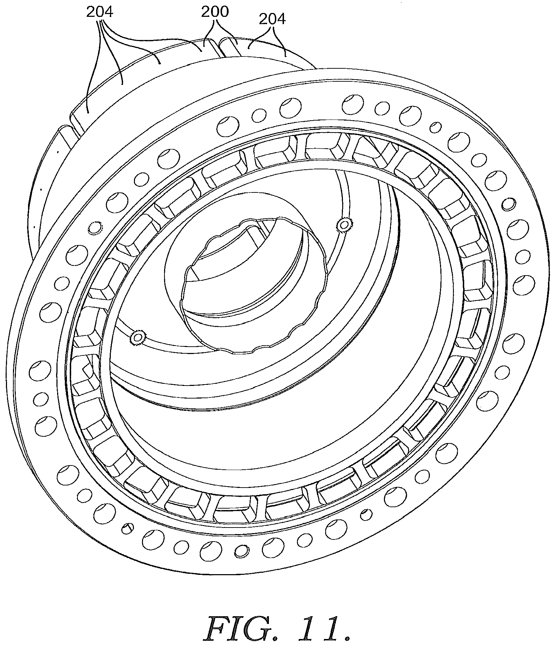

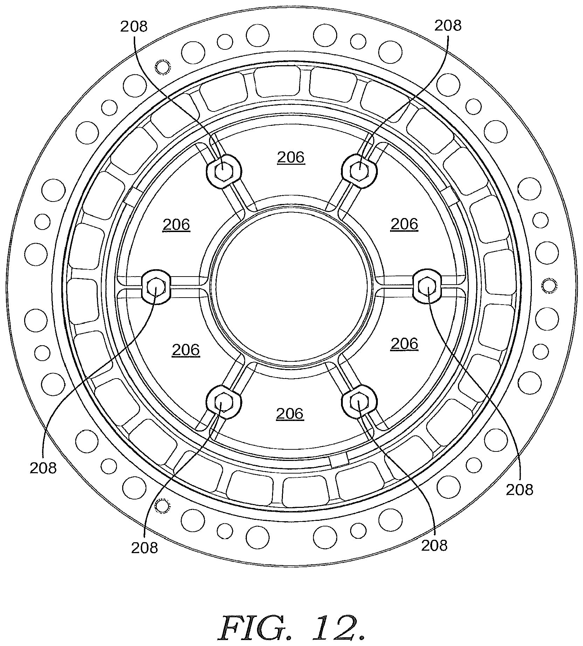

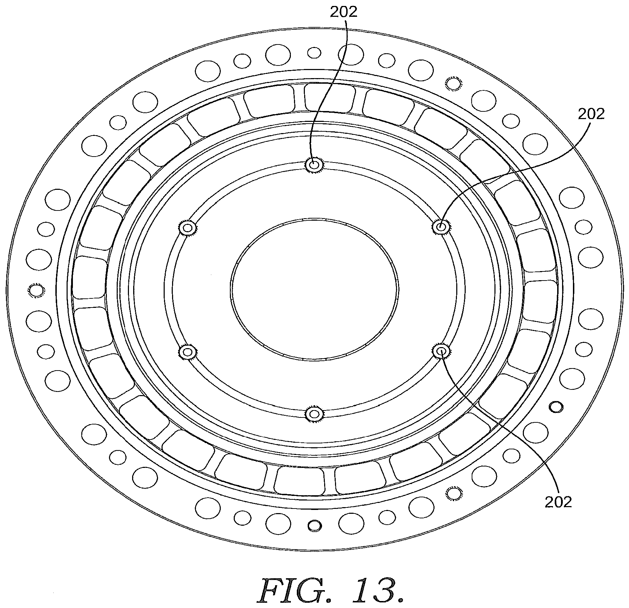

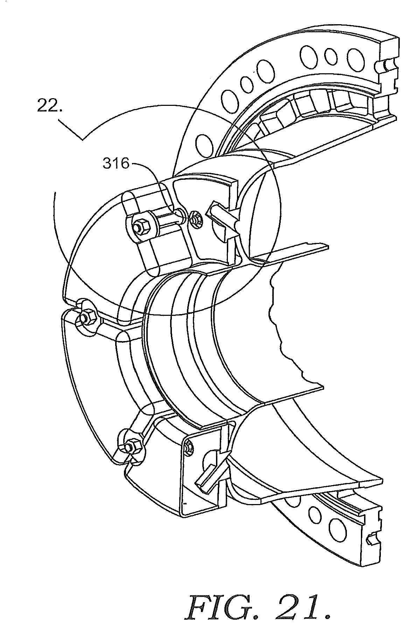

The present invention discloses a dome assembly for gas turbine combustion system for use in a premix combustion system to help reduce combustion dynamics and is shown in detail in FIGS. 1-26. As one skilled in the art understands, a gas turbine engine typically incorporates a plurality of combustors, Generally, for the purpose of discussion, the gas turbine engine may include low emission combustors such as those disclosed herein and may be arranged in a can-annular configuration about the gas turbine engine. One type of gas turbine engine (e.g., heavy duty gas turbine engines) may be typically provided with, but not limited to, six to eighteen individual combustors, each of them fitted with the components outlined above. Accordingly, based on the type of gas turbine engine, there may be several different fuel circuits utilized for operating the gas turbine engine.

Referring specifically to FIG. 1, a gas turbine combustion system 100 in accordance with an embodiment of the present invention is shown in cross section. The gas turbine combustion system 100 comprises a generally cylindrical combustion liner 102 having a central axis A-A and located coaxial to and radially within a flow sleeve 104. The combustion liner 102 has an inlet end 106 and an opposing outlet end 108.

The gas turbine combustion system 100 also comprises a set of main fuel injectors 110 positioned radially outward of the combustion liner 102 and proximate an upstream end of the flow sleeve 104. The combustion system 100 disclosed in FIG. 1 is a multi-stage premixing combustion system comprising four stages of fuel injection based on the loading of the engine. However, it is envisioned that the specific fuel circuitry and associated control mechanisms could be modified to include fewer or additional fuel circuits.

For the embodiment of the present invention shown in FIG. 1, the main fuel injectors 110 are located radially outward of the combustion liner 102 and spread in an annular array about the combustion liner 102. The main fuel injectors 110 are divided into two stages with a first stage extending approximately 120 degrees about the combustion liner 102 and a second stage extending the remaining annular portion, or approximately 240 degrees, about the combustion liner 102. The first stage of the main fuel injectors 110 are used to generate a Main 1 flame in combustion liner 102 while the second stage of the main fuel injectors 110 generate a Main 2 flame in the combustion liner.

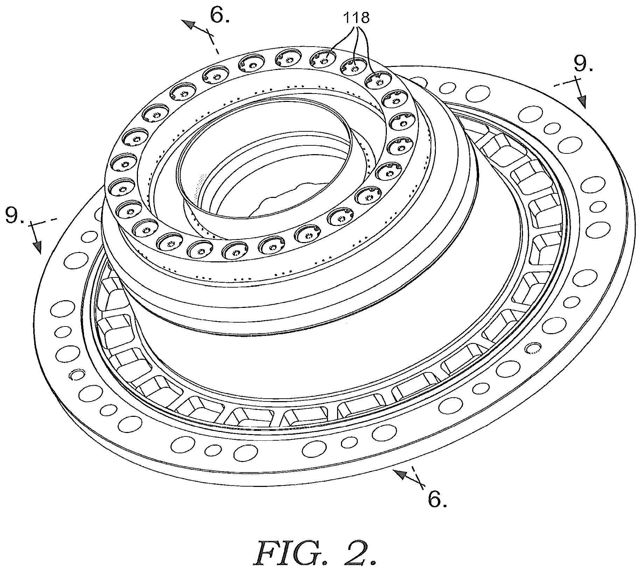

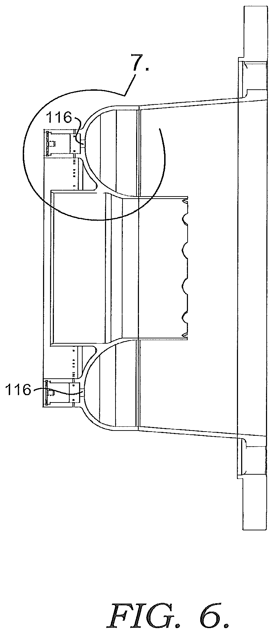

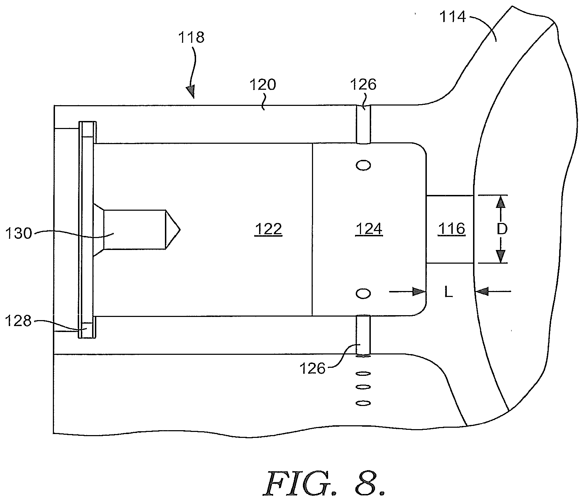

The gas turbine combustion system also comprises a combustor dome assembly 112 that encompasses the inlet end 106 of the combustion liner 102. The combustor dome assembly 112 extends from proximate the set of main fuel injectors 110 to a dome plate 114, where the dome plate 114 has a generally hemispherical-shaped cross section with the dome plate 114 positioned a distance forward of the inlet end 106 of the combustion liner 102 and turning to extend a distance into the combustion liner 102. The shape of the combustor dome assembly can also be seen in FIG. 6. Referring now to FIGS. 2-9, the combustor dome assembly 112 comprises a plurality of openings 116 in the dome plate 114, where each of the openings 116 has a diameter D and a neck length L. Preferably, the openings 116 have a circular cross section, but other shapes are also possible. The openings 116 are oriented in the dome plate 114 so as to be parallel with a central axis A-A of the combustion system 100. Extending away from the dome plate 114, opposite of the combustion liner, is a plurality of dome dampers 118. Referring to FIG. 8, each of the dome dampers 118 encompasses one of the openings 116 and comprises a damper body 120 having an opening located therein. Accordingly, for the dome plate 114, the dome dampers 118 are oriented in an annular array about the central axis A-A of the combustion system 100. A removable cover plate 122 is secured to an end of the damper body 120 opposite of the opening 116 to form a damper volume 124. The damper body 120 also includes a plurality of purge holes 126.

The dome dampers 118 extend away from the combustion liner 102 in a way to establish predetermined volumes of air in order to provide a volume of air sufficient to dampen pressure fluctuations within the combustion liner 102. The dome dampers 118 are supplied with compressed air by way of purge holes 126, which, in an embodiment of the present invention are located along a side of the damper body 120 and are sized both in diameter and quantity to ensure a sufficient volume of compressed air is provided to the damper volume 124. The exact location and spacing of the purge holes 126 can vary. That is, the purge holes 126 may be located about the damper body 120 or the cover plate 122.

In operation, a pressure wave from the combustor travels upstream towards the dome plate 114, passes through the openings 116 in the dome plate 114, and into the damper volume 124 formed by the damper body 120 and cover plate 122. Once in the damper volume 124, the wave then encounters the volume of compressed air. The extra volume of air serves to generate a wave that is out of phase with an incoming wave, similar to how a spring and shock operate to counteract the movement of a motor vehicle. That is, the volume of air in the damper counteracts the pressure wave traveling up through the combustor.

As discussed above, the dome dampers 118 and corresponding damper volume 124 are sized to specifically target a particular resonance frequency for the damper in order to counteract a specific frequency or pressure oscillation in the combustion system. As one skilled in the art understands, the basic formula for resonance frequency of a damper is fᵣₑₛ=c/2/π^{∗}sqrt(A_{neck}/L_{neck,eff}/V_{damper}), where fᵣₑₛ is the resonance frequency of the damper, c is the speed of sound, A_{neck} is the cross sectional area of the opening 116 connecting the damping volume to the combustor, L_{neck,eff} is the effective length L of the opening 116 and V_{damper} is volume of the damper. Therefore, altering the cross sectional area of opening 116, its length L and the volume 124 can each affect the resonance frequency for the damper. For example, decreasing the volume of the damper increases the damper resonance frequency, while increasing the volume of the damper lowers the damper resonance frequency. Furthermore, the length L of the opening 116, or "neck" of the opening, can also vary. That is, if the length L of the neck region is increased, the resonance frequency of the damper decreases and if the length L of the neck region is decreased, the resonance frequency of the damper increases. A final variable for determining the resonance frequency of the damper is the area of the opening 116. If the area of opening 116 is increased, through a larger diameter D, the resonance frequency of the damper increases, whereas if the area of opening 116 is decreased, through a smaller diameter D, the resonance frequency of the damper decreases. Therefore, depending on the frequency one is trying to dampen, various elements on the damper can be modified to target one or more specific frequencies.

As for the frequencies being targeted by a dome damper structure, in premix style combustions systems, such as that shown in FIG. 1, high frequencies (screech) in the range of 1-10kHz are typically of high concern. However, lower frequencies, in the range of 50-500Hz can also be targeted. When targeting screech, or high frequencies, typical damper dimensions include a neck length L of approximately 5mm - 25mm and a neck diameter D of approximately 5mm - 15mm. When targeting lower frequencies, a typical neck length L is longer, on the order of approximately 20mm - 200mm while the neck diameter D is approximately 10mm - 100mm. As such, one way to express these geometric requirements is through a ratio of diameter D to neck length L, which for an embodiment of the present invention is approximately 0.2 to 2.0.

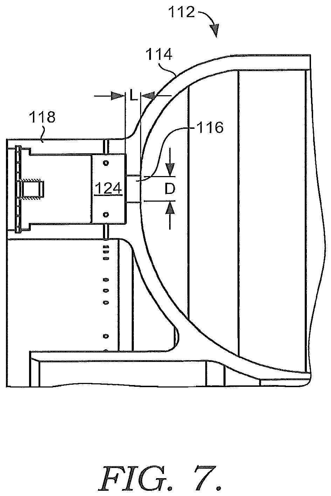

With respect to the purge holes 126, the equivalent area of all of the purge holes 126 define the total mass flow through the damper, and therefore, the velocity in the neck, which in turn defines the damping properties. The total area of the purge holes 126 is generally small compared to the area of the opening 116, or Aneck, such that the majority of the pressure drop across the damper is generated at the purge holes 126. For example, the total area of all of the purge holes 126 are approximately 10% or less than the Aneck (or area of the opening 116). For the embodiment depicted in FIGS 1-9, and specifically referring to FIGS. 7-9, each of the damper bodies 120 have six purge holes 126. More purge holes 126 are typically required for higher velocity flow.

As discussed above, there are three major variables which can be adjusted to adjust the resonance frequency of the damper - area of the neck (hence diameter D), length of the neck (length L) and volume of the damper. However, as a practical point, not all of these variables can be changed once the hardware has been manufactured in the event during operation, it is determined that a different frequency of the combustor should be dampened. For example, it is difficult to change the size of the openings 116 and the length L of the openings on completed combustion systems. However, one such variable that can be modified is the volume of the damper. For the configuration depicted in FIGS. 2, 4, and 6-8, the damper volume 124 can be modified by way of a removable coverplate 122, or plug-like plate. The removable coverplate 122 is secured to damper body 120 by a removable fastener 128, such as a snap ring, clip, threaded body, or a bolt. This fastening mechanism provides an easy way to remove the coverplate 122 and replace it with a coverplate of a different size, resulting in a different damper volume 124. In order to ease the process of exchanging coverplates 122, each coverplate typically has a recess pocket 130 in which a tool can be placed to help remove the coverplate 122. Thereafter a new coverplate 122 can be put in place and then secured to one or more of the damper bodies 120.

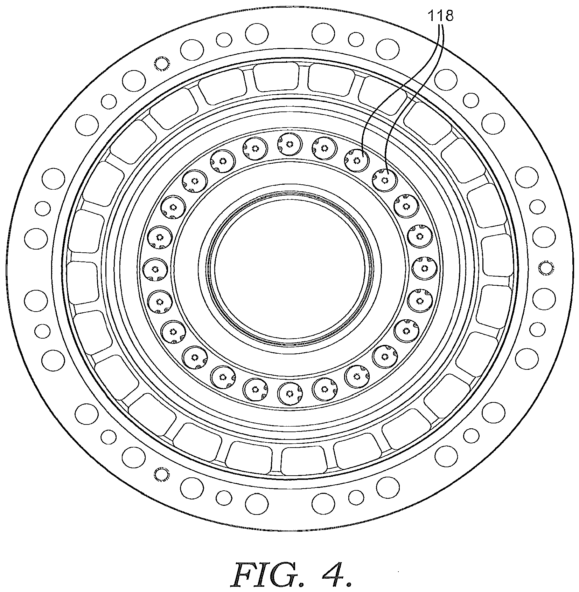

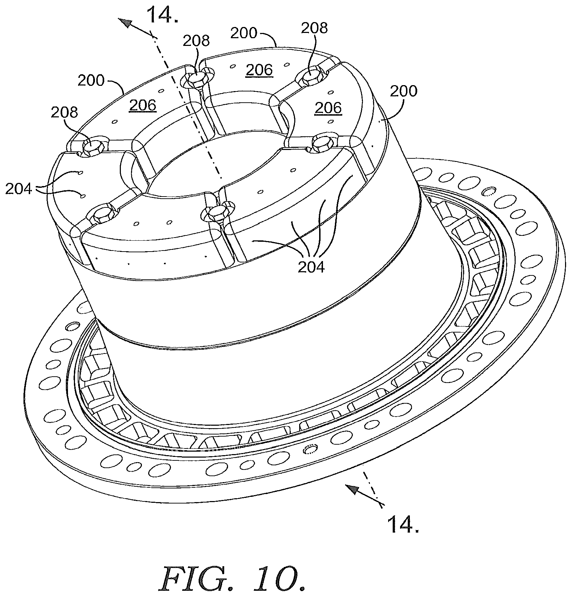

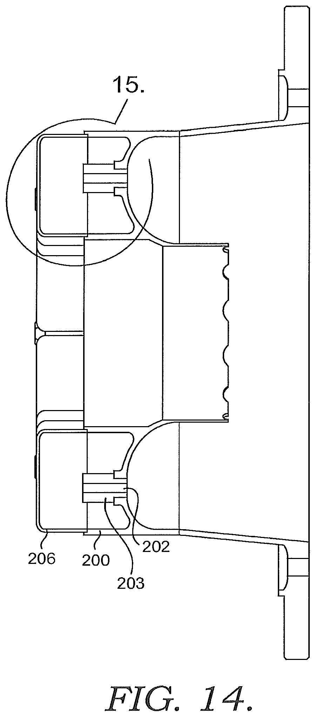

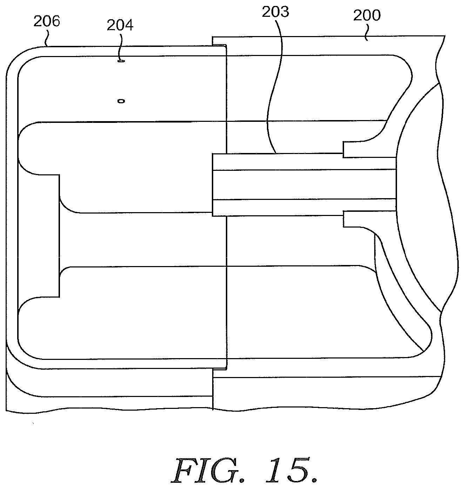

The damper bodies 120 shown in FIGS. 1-9 are generally cylindrical and oriented in an annular array about a center axis, as shown in FIGS. 2 and 4. However, dampers are not limited to the cylindrical configuration, and in fact, can take on generally any shape and quantity, as required. An alternate embodiment of the present invention is shown in detail in FIGS. 10-15. In this alternate embodiment of the present invention, one or more resonator boxes 200 are secured over the dome plate and opening 202. The size of opening 202 (diameter and neck length) is controlled by a threaded insert 203, as shown in FIGS. 14 and 15. The neck length and diameter may be controlled by a single threaded insert. The resonator boxes 200 provide a larger volume than the smaller cylindrical-shaped dampers as depicted in FIGS. 1-9. For the similar combustion system of FIGS. 1-9, instead of twenty-four cylindrical dampers, there are instead six resonator boxes employed. However, it is envisioned that the number of cylindrical dampers and resonator boxes may be modified to include fewer or additional dampers or boxes. Similar to the cylindrical damper bodies 120, the resonator boxes 200 also include purges holes 204 for supplying compressed air into the resonator box 200. As discussed above, the placement of purge holes 204 can also vary about the resonator 200 and/or the coverplate 206. Unlike the cylindrical damper body of the prior configuration, the coverplate 206 of the resonator box 200 is preferably fastened to the resonator box 200 by a means such as a bolt 208.

Similar to the cylindrical damper bodies, the three factors that can also change the resonator frequency of a resonator box 200 are the area of the neck (hence diameter D), length of the neck (length L) and volume of the resonator box. However, if during operation it is determined that a different frequency should be dampened, not all of these variables can be changed once the hardware has been manufactured. One variable that can be modified relatively easily, post-manufacturing, is the volume of the resonator box. The coverplate 206 can be removed and replaced with a different size coverplate that, due to its thickness, either increases or decreases the volume in the resonator box 200.

In an alternate embodiment of the present invention, various combinations of the damping mechanisms discussed above can be utilized together. For example, it is possible to employ a dome damper 118 positioned within a resonator box 200. Alternatively, it is possible to use the resonator box 200 with a simple opening in the dome (i.e. no separate damper body).

The damper bodies discussed above are depicted generally coaxial to the central axis A-A. However, the dome damper 118 and/or resonator box 200 can also be oriented at an angle relative to the central axis A-A. Where such damper bodies are angled, so are the corresponding openings 116 and 202. An angled opening allows for damper airflow interaction with the combustion flame while providing an indirect interaction with the anchoring flame.

In yet another embodiment of the present invention it is possible to target multiple critical frequencies in the combustion system through dampers configured to counteract more than one critical frequency. For example, a combustor can have a first set of dampers having a first opening diameter, area, volume and neck length directed towards targeting a first frequency, and a second set of dampers, having a second opening diameter, area, volume and neck length directed towards targeting a different frequency than the first set of dampers. The quantity of the first set of dampers and second set of dampers can vary as required.

In the embodiments discussed above, a basic geometry for the damper was a single volume with one neck length and effective area are disclosed. However, it is envisioned that more complex geometries for the damper bodies can be utilized in the present invention. For example, in another embodiment, multiple frequencies can be targeted by way of a damper body having multiple volumes arranged in an axial series, where a series of volumes and necks form a multi-volume damper.

As discussed above, without damper mechanisms in place on a premix combustor disclosed in FIG. 1, the operation of the premix combustor is limited. For example, for a combustion system similar to that of FIG. 1, normal combustion dynamics of 3447 Pa (0.5 psi) fluctuation could be tolerated by combustion hardware. By implementing a damper system disclosed herein, greater pressure fluctuations (increased combustion dynamics) can be tolerated, including pressure fluctuations upwards of approximately 6895 Pa (1 psi). The damper system helps to reduce the adverse effects of the combustion dynamics by reducing the impact of critical vibration levels.

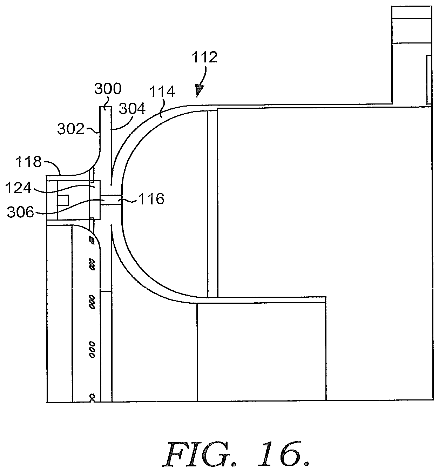

Yet another embodiment of the present invention is disclosed in FIGS. 16-25. As discussed above, the plurality of damper bodies 120 and resonator boxes 200 are mounted to the dome plate 114. However, the dome plate 114 has a curved surface, which can present difficulty when mounting this hardware. Furthermore, such combustor construction can also be quite costly to manufacture due to the complex geometries.

An additional feature that may be included in an embodiment of the present invention is an adaptor plate 300 which is positioned between the resonator box 200 or dome dampers 118 and the dome plate 114. The adapter plate 300 has the same general configuration and function, whether it is used in conjunction with a resonator box or a damper body - to provide an improved way of mounting and securing the dampers to the domeplate 114 of the combustor.

Referring to FIGS. 16-19, the adaptor plate 300 is shown with respect to the embodiment of the present invention featuring a plurality of individual dome dampers 118. The adapter plate 300 comprises a forward face 302 and an aft face 304 spaced a distance from the forward face 302 and parallel to the forward face 302. The adapter plate 300 is secured to the dome plate 114 by a plurality of fasteners or can be permanently fixed to the domeplate 114 by way of welding or brazing.

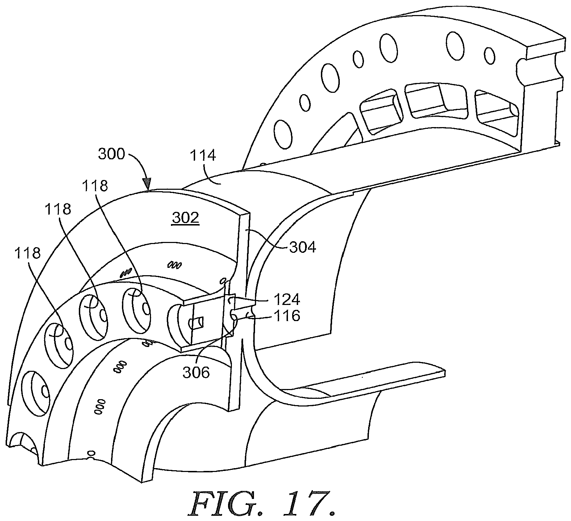

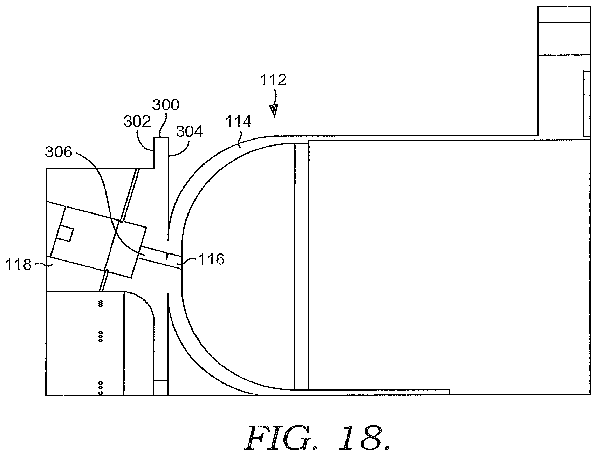

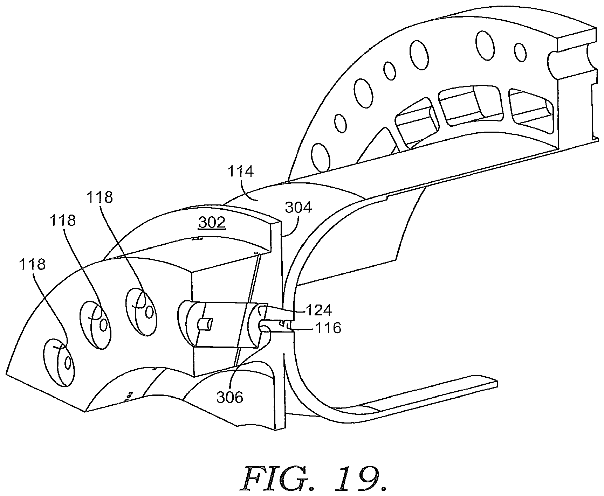

The adapter plate 300 also comprises a first plurality of plate openings 306. These openings 306 correspond to the openings 116 in the domeplate 114 such that the damper volume 124 is in communication with the combustor volume inside the domeplate 114. Extending from the forward face 302 of the adapter plate 300 are a plurality of dome dampers 118. The dome dampers 118 can be integral to the adapter plate 300 or separately attached, such as through braze or welding, to the adapter plate 300. The dome dampers 118 can be mounted perpendicular to the adapter plate 300 as shown in FIGS. 16 and 17 or the dome dampers 118 can be mounted at an angle relative to the dome dampers 118, as shown in FIGS. 18 and 19.

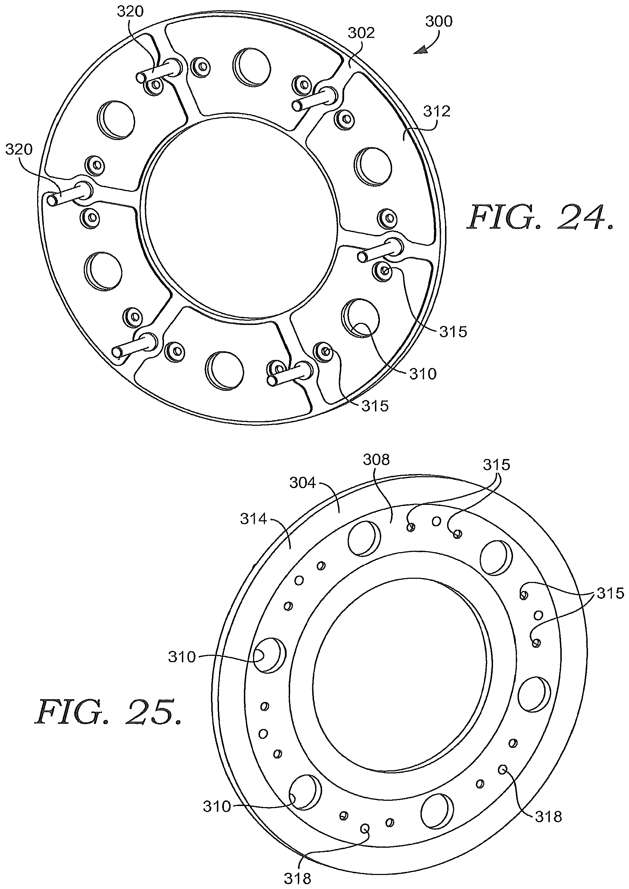

In another version of the present invention, the adapter plate 300 can take on a slightly different configuration as shown in FIGS. 24 and 25. More specifically, the adapter plate 300 has a front face 312 and an opposing aft face 314. The aft face 314 includes a contoured portion 308 that is sized and shaped to mate to the curved profile of the domeplate 114.

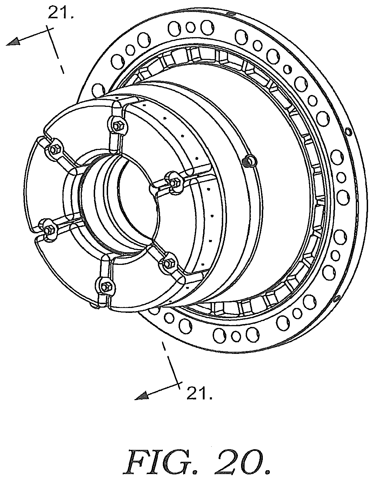

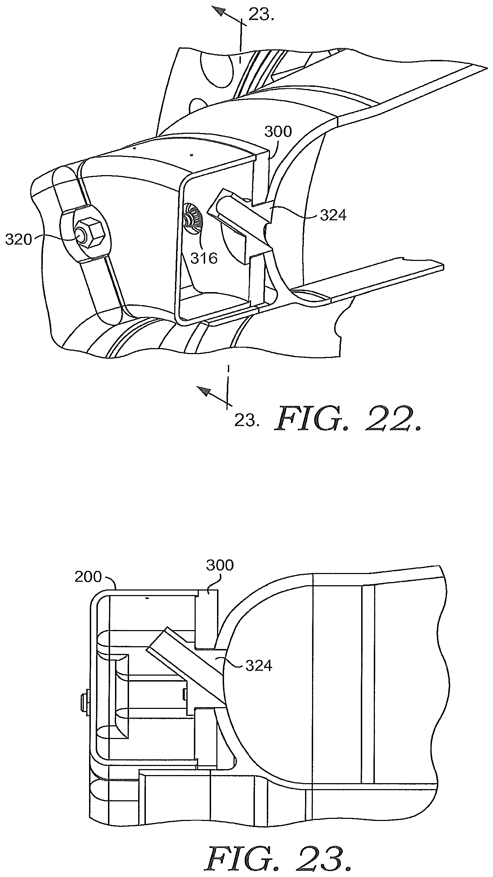

The alternate version of the adapter plate 300 can be seen in use with an alternate dome damper configuration, the resonator box 200, as shown in FIGS. 20-23. Referring to FIGS. 20-23, a combustor dome assembly incorporating the resonator boxes 200, similar to that of FIGS. 10-15 is disclosed. However, for the embodiment shown in FIGS. 20-23, the resonator boxes 200 are mounted to the domeplate 114 through the adapter plate 300, previously discussed and shown in FIGS. 24 and 25. More specifically, the adapter plate 300 shown in FIGS. 24 and 25 includes a first plurality of plate openings 310 through which the damper bodies / volume communicates with the combustor. The adapter plate 300 also includes a second plurality of plate openings 315. The adapter plate 300 also includes a third plurality of openings 318 spaced in an annular array about the adapter plate 300. The third plurality of openings 318 each include a fastener 320 secured to the adapter plate 300, where the fastener 320 is used to secured the one or more resonator boxes 200 to the adaptor plate 300, as shown in FIG. 22.

The dome dampers 324 can extend generally perpendicular to the adapter plate 300. Alternatively, and as shown in FIGS. 22 and 23, the dome dampers 324 can also be oriented at an angle relative to the adapter plate 300. Whether resonator boxes 200 or dome dampers 118 are being used, the adaptor plate 300 provides an improved way of securing and locating damper configurations to the domeplate 114.

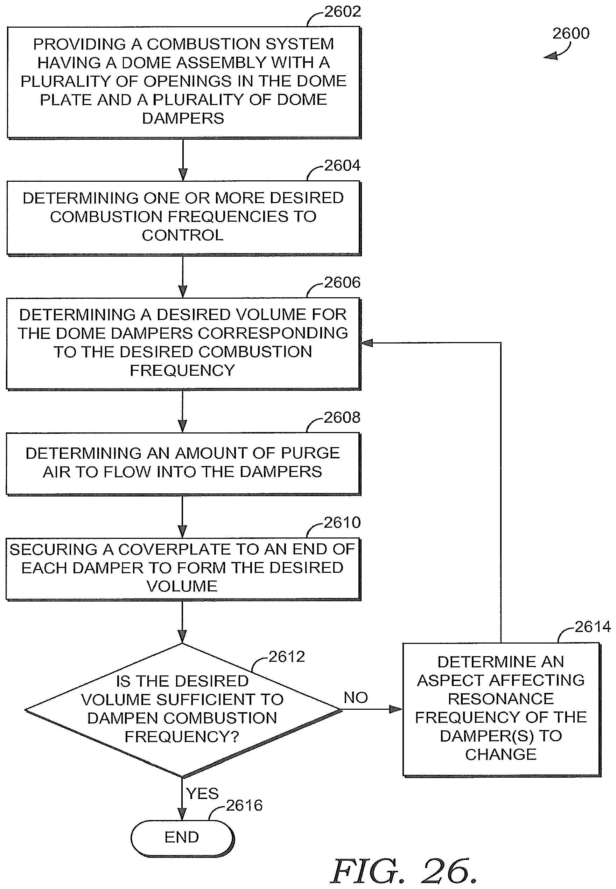

Referring to FIG. 26, an alternate embodiment of the present invention discloses a method 2600 of regulating combustion dynamics in a gas turbine combustor. In a step 2602, a combustion system is provided having a combustor dome assembly comprising a dome plate with a plurality of openings in the dome plate, where each of the openings has a diameter and neck length. The combustion system also includes a plurality of dome dampers encompassing respective openings in the dome plate. In a step 2604, one or more desired combustion frequencies to control is determined. As discussed above, the frequency to be controlled can be a high frequency, such as screech, or a lower frequency. In a step 2606 a desired volume for the dome dampers necessary to target the one or more frequencies identified in step 2604 is determined. Then, in a step 2608, a desired amount of purge air to flow into the dome dampers is determined. In a step 2610, a coverplate is secured to at least an end of the dome dampers where the coverplate is placed in a position to form the desired volume for the dampers determined in step 2606. Then, in a step 2612, a determination is made as to whether the desired volume of each damper determined in step 2606 is sufficient to alter the combustor frequency. Such a determination is typically made as a result of operating the combustion system. If the determination is made that the damper volume is insufficient, then in a step 2614, one or more variables affecting the resonance frequency of the damper, such as neck length, opening diameter or damper volume are determined to be changed and the process returns to step 2606 to determine the desired damper volume. If a determination is made at step 2612 that the desired damper volume is sufficient to dampen the desired combustion frequency, then the process ends at a step 2616.

While the invention has been described in what is known as presently the preferred embodiment, it is to be understood that the invention is not to be limited to the disclosed embodiment but, on the contrary, is intended to cover various modifications and equivalent arrangements within the scope of the following claims. The present invention has been described in relation to particular embodiments, which are intended in all respects to be illustrative rather than restrictive.

From the foregoing, it will be seen that this invention is one well adapted to attain all the ends and objects set forth above, together with other advantages which are obvious and inherent to the system and method. It will be understood that certain features and subcombinations are of utility and may be employed without reference to other features and subcombinations. This is contemplated by and within the scope of the claims.

## Claims

1. A dome assembly for a gas turbine combustion system (100) ; the gas combustion system (100) extending along a central axis (A-A); the dome assembly comprising:
a dome plate (114) having a generally hemispherical cross section, the dome plate (114) encompassing an inlet (106) to a combustion liner (102);
the dome assembly comprising:
a plurality of openings (116) in the dome plate (114) where each opening (116) has a diameter (D) and a neck length (L);
a plurality of dome dampers (118) extending in a direction away from the dome plate (114), opposite of the combustion liner (102); the dome dampers (118) being oriented in an annular array about the central axis (A-A); each of the dome dampers (118) encompassing a respective opening (116) in the dome plate (114) and comprising:
a damper body (120) having a cavity located therein;
a coverplate (122) secured to at least an end of the damper body (120) to form a damper volume (124); and
a plurality of purge holes (126) located about the damper body (120);
**characterized in that** the plurality of openings (116) are oriented on the dome plate (114) so as to be parallel with the central axis (A-A).

2. The dome assembly of claim 1, wherein the damper body (120) is generally cylindrical in cross section.

3. The dome assembly of claim 1, wherein the coverplate (122) is removably secured to the damper body (120) by one of the group comprising a snap ring, clip, threaded body or bolt.

4. The dome assembly of claim 2, wherein the purge holes (126) are located about a circumference of the cylindrical body (120) or in the coverplate (122).

5. The dome assembly of claim 1, wherein the damper body (120) consists of a resonator box (200).

6. The dome assembly of claim 5, wherein the coverplate (122) of the resonator box is bolted to the dome assembly (112).

7. The dome assembly of claim 1, wherein the diameter to neck length ratio ranges from 0.2 to 2.0.

8. The dome assembly of claim 1, wherein the dome dampers (118) are capable of controlling both high and low frequencies.

9. The dome assembly of claim 1, wherein the dome dampers (118) have different damper volumes.

10. A gas turbine combustion system comprising the dome assembly as defined in claim 1, further comprising
a generally cylindrical combustion liner (102) having the central axis (A-A) and
located coaxial to and radially within a flow sleeve (104), the combustion liner (102) having an inlet end (106) and an opposing outlet end (108);
a set of main fuel injectors (110) positioned radially outward of the combustion liner (102) and proximate an upstream end of the flow sleeve (104); the combustor dome assembly (112) extending from proximate the set of main fuel injectors (110) to the dome plate (114), the dome plate (114) positioned a distance forward of the inlet end of the combustion liner (102) and turning to extend a distance into the combustion liner (102).

11. The gas turbine combustion system of claim 10, wherein the coverplate (122) is removably secured to the damper body (120) by a fastener (128) selected from the group comprising a snap ring, clip, threaded body or bolt.

12. The gas turbine combustion system of claim 10, wherein the damper body (120) is generally cylindrical in cross section.

13. The gas turbine combustion system of claim 10, wherein the damper body (120) comprises a resonator box (200).

14. The gas turbine combustion system of claim 10, wherein the diameter to neck length ratio ranges from 0.2 to 2.0.

## Patentansprüche

1. Haubenanordnung für ein Gasturbinen-Verbrennungssystem (100), das sich entlang einer Mittelachse (A-A) erstreckt; wobei die Haubenanordnung umfasst:
eine Haubenplatte (114) mit einem im Allgemeinen halbkugelförmigen Querschnitt, wobei die Haubenplatte (114) einen Einlass (106) zu einer Verbrennungsauskleidung (102) umgibt;
wobei die Haubenanordnung umfasst:
mehrere Öffnungen (116) in der Haubenplatte (114), wobei jede Öffnung (116) einen Durchmesser (D) und eine Halslänge (L) aufweist;
mehrere Haubendämpfer (118), die sich in einer Richtung von der Haubenplatte (114) weg, gegenüberliegend zu der Verbrennungsauskleidung (102), erstrecken; wobei die Haubendämpfer (118) in einer ringförmigen Anordnung um die Mittelachse (A-A) ausgerichtet sind; wobei jeder der Haubendämpfer (118) eine entsprechende Öffnung (116) in der Haubenplatte (114) umgibt und umfasst:
einen Dämpferkörper (120) mit einem darin angeordneten Hohlraum;
eine Abdeckplatte (122), die an wenigstens einem Ende des Dämpferkörpers (120) befestigt ist, um ein Dämpfervolumen (124) zu bilden; und
mehrere Spüllöcher (126), die um den Dämpferkörper (120) herum angeordnet sind;
**dadurch gekennzeichnet, dass** die mehreren Öffnungen (116) so auf der Haubenplatte (114) ausgerichtet sind, dass sie parallel zu der Mittelachse (A-A) sind.

2. Haubenanordnung nach Anspruch 1, wobei der Dämpferkörper (120) im Querschnitt im Allgemeinen zylindrisch ist.

3. Haubenanordnung nach Anspruch 1, wobei die Abdeckplatte (122) durch ein Element aus der Gruppe, die einen Sprengring, eine Klammer, einen Gewindekörper oder Gewindebolzen umfasst, abnehmbar am Dämpferkörper (120) befestigt ist.

4. Haubenanordnung nach Anspruch 2, wobei die Spüllöcher (126) um einen Umfang des zylindrischen Körpers (120) oder in der Abdeckplatte (122) angeordnet sind.

5. Haubenanordnung nach Anspruch 1, wobei der Dämpferkörper (120) einen Resonatorkasten (200) umfasst.

6. Haubenanordnung nach Anspruch 5, wobei die Abdeckplatte (122) des Resonatorkastens mit der Haubenanordnung (112) verschraubt ist.

7. Haubenanordnung nach Anspruch 1, wobei das Verhältnis von Durchmesser zu Halslänge im Bereich von 0,2 bis 2,0 liegt.

8. Haubenanordnung nach Anspruch 1, wobei die Haubendämpfer (118) geeignet sind, sowohl hohe als auch niedrige Frequenzen zu kontrollieren.

9. Haubenanordnung nach Anspruch 1, wobei die Haubendämpfer (118) unterschiedliche Dämpfervolumina aufweisen.

10. Gasturbinen-Verbrennungssystem, das die Haubenanordnung nach Anspruch 1 umfasst, ferner umfassend:
eine im Allgemeinen zylindrische Verbrennungsauskleidung (102), die die Mittelachse (A-A) aufweist und koaxial zu und radial innerhalb einer Strömungshülse (104) angeordnet ist, wobei die Verbrennungsauskleidung (102) ein Einlassende (106) und ein gegenüberliegendes Auslassende (108) aufweist;
einen Satz von Hauptkraftstoffinjektoren (110), die radial außerhalb der Verbrennungsauskleidung (102) und in der Nähe eines stromaufwärtigen Endes der Strömungshülse (104) angeordnet sind;
wobei sich die Brenner-Haubenanordnung (112) von nahe dem Satz der Hauptkraftstoffinjektoren (110) bis zu der Haubenplatte (114) erstreckt, wobei die Haubenplatte (114) in einem Abstand vor dem Einlassende der Verbrennungsauskleidung (102) angeordnet ist und sich wendet, um sich eine Strecke in die Verbrennungsauskleidung (102) zu erstrecken.

11. Gasturbinen-Verbrennungssystem nach Anspruch 10, wobei die Abdeckplatte (122) abnehmbar an dem Dämpferkörper (120) durch ein Befestigungselement (128) befestigt ist, das aus der Gruppe ausgewählt ist, die einen Sprengring, eine Klammer, einen Gewindekörper oder Gewindebolzen umfasst.

12. Gasturbinen-Verbrennungssystem nach Anspruch 10, wobei der Dämpferkörper (120) im Querschnitt im Allgemeinen zylindrisch ist.

13. Gasturbinen-Verbrennungssystem nach Anspruch 10, wobei der Dämpferkörper (120) einen Resonatorkasten (200) umfasst.

14. Gasturbinen-Verbrennungssystem nach Anspruch 10, wobei das Verhältnis von Durchmesser zu Halslänge im Bereich von 0,2 bis 2,0 liegt.

## Revendications

1. Ensemble de dôme pour un système de combustion (100) de turbine à gaz ; le système de combustion à gaz (100) s'étendant le long d'un axe central (A-A) ; l'ensemble de dôme comprenant :
une plaque de dôme (114) ayant une section transversale généralement hémisphérique, la plaque de dôme (114) comprenant une entrée (106) dans une chemise de combustion (102) ;
l'ensemble de dôme comprenant :
une pluralité d'ouvertures (116) dans la plaque de dôme (114) où chaque ouverture (116) a un diamètre (D) et une longueur de col (L) ;
une pluralité d'amortisseurs de dôme (118) s'étendant dans une direction à distance de la plaque de dôme (114), à l'opposé de la chemise de combustion (102) ; les amortisseurs de dôme (118) étant orientés dans un réseau annulaire autour de l'axe central (A-A) ; chacun des amortisseurs de dôme (118) comprenant une ouverture (116) respective dans la plaque de dôme (114) et comprenant :
un corps d'amortisseur (120) ayant une cavité positionnée à l'intérieur de ce dernier ;
une plaque de couvercle (122) fixée sur au moins une extrémité du corps d'amortisseur (120) pour former un volume d'amortisseur (124) ; et
une pluralité de trous de purge (126) positionnés autour du corps d'amortisseur (120) ;
**caractérisé en ce que** la pluralité d'ouvertures (116) sont orientées sur la plaque de dôme (114) afin d'être parallèles à l'axe central (A-A).

2. Ensemble de dôme selon la revendication 1, dans lequel le corps d'amortisseur (120) a une section transversale généralement cylindrique.

3. Ensemble de dôme selon la revendication 1, dans lequel la plaque de couvercle (122) est fixée de manière amovible au corps d'amortisseur (120) par un élément du groupe comprenant un anneau de retenue, une attache, un corps fileté ou un boulon.

4. Ensemble de dôme selon la revendication 2, dans lequel les trous de purge (126) sont positionnés autour d'une circonférence du corps cylindrique (120) ou dans la plaque de couvercle (122).

5. Ensemble de dôme selon la revendication 1, dans lequel le corps d'amortisseur (120) se compose d'un boîtier de résonateur (200).

6. Ensemble de dôme selon la revendication 5, dans lequel la plaque de couvercle (122) du boîtier de résonateur est boulonnée sur l'ensemble de dôme (112).

7. Ensemble de dôme selon la revendication 1, dans lequel le rapport de diamètre sur longueur de col est dans la plage de 0,2 à 2,0.

8. Ensemble de dôme selon la revendication 1, dans lequel les amortisseurs de dôme (118) peuvent contrôler à la fois les hautes fréquences et les basses fréquences.

9. Ensemble de dôme selon la revendication 1, dans lequel les amortisseurs de dôme (118) ont des volumes d'amortisseur différents.

10. Système de combustion de turbine à gaz comprenant l'ensemble de dôme selon la revendication 1, comprenant en outre :
une chemise de combustion (102) généralement cylindrique ayant l'axe central (A-A), et positionnée de manière coaxiale par rapport à et de manière radiale dans un manchon d'écoulement (104), la chemise de combustion (102) ayant une extrémité d'entrée (106) et une extrémité de sortie (108) opposée ;
un ensemble d'injecteurs de carburant principaux (110) positionnés radialement vers l'extérieur de la chemise de combustion (102) et à proximité d'une extrémité en amont du manchon d'écoulement (104) ;
l'ensemble de dôme de chambre de combustion (112) s'étendant depuis la proximité de l'ensemble d'injecteurs de carburant principaux (110) jusqu'à la plaque de dôme (114), la plaque de dôme (114) étant positionnée à une distance vers l'avant de l'extrémité d'entrée de la chemise de combustion (102) et tournant pour étendre une distance dans la chemise de combustion (102).

11. Système de combustion de turbine à gaz selon la revendication 10, dans lequel la plaque de couvercle (122) est fixée de manière amovible sur le corps d'amortisseur (120) par une fixation (128) sélectionnée dans le groupe comprenant un anneau de retenue, une attache, un corps fileté ou un boulon.

12. Système de combustion de turbine à gaz selon la revendication 10, dans lequel le corps d'amortisseur (120) a une section transversale généralement cylindrique.

13. Système de combustion de turbine à gaz selon la revendication 10, dans lequel le corps d'amortisseur (120) comprend un boîtier de résonateur (200).

14. Système de combustion de turbine à gaz selon la revendication 10, dans lequel le rapport de diamètre sur la longueur de col est dans la plage de 0,2 à 2,0.
